# EUROPEAN PATENT APPLICATION

(11) **EP 2 186 634 A1**
(43) Date of publication of application: **19.05.2010**
(21) Application number: 08169056.2
(22) Date of filing: 13.11.2008
(51) Int. Cl.: B32B 27/32, B65D 65/40, C08L 23/02

(54) **CURL-FREE POLYOLEFIN-BASED PACKAGING FILM USED FOR THE PACKAGING OF STERILE PRODUCTS**

(71) Applicant: Amcor Flexibles Transpac N.V., 1935 Zaventem (BE)
(72) Inventor: Malfait, Tony, B-8880, ROLLEGEM-KAPELLE (BE); Buysens, Kris, B-9700, OUDENAARDE (BE)
(74) Representative: pronovem

(57) **Abstract**

The present invention relates to a multilayer, substantially curl-free, coextruded polymeric film for the production of packaging for medical devices intended to be terminally sterilised by heat, gamma or beta irradiation, comprising:
- a polyolefinic base layer comprising between 10 % and 50 % by weight of a cyclic olefin copolymer having a Tg higher than 130°C;
- a polyolefinic sealing layer having a thickness between 5 and 15 % of the total film thickness.

## Description

### Field of the Invention

The present invention relates to curl-free polyolefin-based packaging films used for the packaging of sterile products.

### State of the Art

Medical devices, such as surgical gloves, wound-care dressings and the likes are usually prepared away from the location of use. To ensure their sterility at the point of use, they are usually terminally sterilised in a closed packaging, having suitable sterility barrier properties.

"Terminal sterilisation" describes the process that ensures that surgical items and other medical devices or consumables are sterile at the point of use. Items that are terminally sterilised are packaged before being sterilised, and are stored, transported and delivered with the packaging intact (not punctured or wet). Both the item to be sterilised and the packaging must be compatible with the sterilisation technology. The packaging itself must be permeable to the method used and impermeable to environmental contaminants. Items that have been processed unwrapped must be used immediately, as they are not sterile and risk contamination from the local environment. Disinfection reduces the number of viable micro-organisms on the item, but does not necessarily inactivate viruses and bacterial spores. It is also important to note that the external surfaces of the packaging are not maintained sterile during shelf life.

Plastic to plastic sealed packages terminally sterilised are currently based on multilayer laminate top and bottom webs. Multilayer laminates are produced by adhesive lamination, heat lamination or extrusion coating processes. In these laminated top and bottom webs, the outside layers are heat-resistant while at least one of the inside layers, forming the joint of the pack, comprises a peelable layer. Outside and inside layers show a difference in melting point in order to avoid that the outside layer sticks to the sealing bars during the direct contact sealing operation. Typical examples in the market for surgical gloves and wound-care dressings are packs with outer layers in the top and bottom web with a temperature-resistant oriented film (OPET, OPA) and a PE peelable layer as inside layer for the top and a PE-based layer as inside layer for the bottom.

The same type of peelable top layers can be combined with thermo-formable plastic bottom webs such as PA/PE, PETG, PVC, ...

The major drawback of the multilayer laminate structure used for the packaging of medical devices is however the tendency to curl once the pack is opened. Severe curling of the laminate may result in a contact between the non-sterile outside layer and the sterile product. Given the risk of contamination, curling should be avoided.

Curling is the result of the bi-metallic effect of the outside and inside layer due to differences in the thermal expansion coefficient between both layers. Permanent curling can also result from differential shrinkage following particular thermal history or built-in stresses during the adhesive lamination of a non-oriented sealant layer with the oriented outside layer. As the temperature history (storage/transport conditions) influences the curl properties of a multilayer laminate, the curl phenomenon occurring during the opening of a flat pack is very difficult to control.

An additional challenge to solve this problem is the environmental and recycling issue. Nowadays users are more and more aware of packaging waste and recycling issues related with multi-component products, mono-type materials being considered as easier to recycle.

Packages with cyclo-olefin copolymer (COC) to increase temperature resistance have been reported in the prior art. EP 1 426 181 describes an outer layer with at least 50wt%, and preferably at least 75wt% COC with a glass transition temperature (Tg) that is higher than the melting temperature (Tm) of the sealable layer. Such composition relies on the assumption that at such high COC content, these latter forms the continuous phase.

Furthermore, due to the high processing temperature of the high Tg COC, purging-out operations have to be set up for standard PE blown film lines. Purging out COC on blown film lines may be time-consuming.

Alternatively, cast co-extrusion lines could be used to manufacture thin COC-based films in order to avoid problems with stickiness and wrinkles occurring during blown extrusion. On conventional feed-block based cast lines with single-manifold dies, differences in viscous flow behaviour between the outer layer, containing the COC, and the softer inner layer may however result in viscosity flow mismatching. As a result of this rheological issue, the individual layers have an uneven thickness distribution, interfacial instabilities occur and the layers do not sufficiently adhere to each other. These problems are well described in the literature of co-extrusion of materials that have different melting temperatures. Therefore, COC-based cast co-extrusion of films having thickness lower than 100 µm is inherently sensitive to layer distortion due to the long simultaneous path-length of the layers in the feed-block and the die head, and due to the high shear-stress associated with thin skin layers in films below 100 µm.

COC polymers are relatively expensive polymers; hence, minimizing their content is commercially beneficial. Moreover, films with rich blend contents of COC are hard to process on conventional PE co-extrusion blown film equipment. Particularly, the ones with Tg above 130°C (so called hard COC types) require high extrusion temperatures (up to 260°C) compared to the standard processing temperature of the sealant layer (190-210°C). In blown film co-extrusion, as a result of the high temperatures required, the soft sealant side of the film tends to stick or block during collapsing and in the further down-stream processing. Additionally, COC-rich films result in stiff films which easily give rise to wrinkles during lay-flat in the blown process. Due to the poor elasticity of COC, the wrinkles are built in resulting in poor winding quality and non-flat reels. Such reels are difficult to process in a further converting operation such as printing.

In sheet extrusion and extrusion of thermo-formable webs between 200 and 400 µm for blister packs, COC extrusion is far more common, as disclosed in EP 1 539 867.

EP 1 388 415 discloses the use of sealable film for making tear-off packaging with balanced initial-tear and tear-propagation properties with at least one layer comprising a mixture with 20-80 wt.% cyclo-olefin copolymer (COC) plus a polyolefin. However, this film has low tear properties and is non-peelable. Moreover, this film does not have a low curl combined with a high temperature resistance for direct-contact sealing. Therefore, it is not suitable for surgical glove packing.

### Aims of the Invention

The present invention aims to provide a sterilisable film that overcomes the drawbacks of the prior art.

The present invention also aims to provide a curl-free co-extruded polyolefin film that can be processed on standard heat-seal packaging lines without the film adhering to the seal bars during the sealing process.

### Summary of the Invention

The present invention discloses a multilayer, substantially curl-free, coextruded polymeric film for the production of packaging for medical devices intended to be terminally sterilised by heat, gamma or beta irradiation, comprising:
- a polyolefinic base layer comprising between 10 % and 50 % by weight of a cyclic olefin copolymer having a Tg higher than 130°C;
- a polyolefinic seal layer having a thickness between 5 and 15 % of the total film thickness.

Specific embodiments of the present invention disclose at least one, or an appropriate combination, of the following features:
- the polyolefin of said base layer is selected from the group consisting of polyethylene, polypropylene, polybutylene, their copolymers with linear alphaolefin having 2 to 10 carbon atoms, and mixtures thereof;
- the polyolefin of said base layer is polypropylene or a copolymer of propylene and ethylene;
- the polyolefin of said base layer is a high-density polyethylene;
- the seal layer is a polyethylene or polyethylene-based peelable seal layer;
- the peelable seal layer comprises a mixture of polyethylene and polybutene-1;
- the base layer comprises a first sub-layer with a first COC concentration and a second sub-layer with a second COC concentration and wherein the first COC concentration does not differ from the second COC concentration by more than 10%;

The present invention also discloses a packaging comprising the film according to any or an appropriate combination of the previous features.

The present invention also discloses the use of a coextruded multilayer polyolefin film comprising any of the previous features, for packaging of medical devices intended to be sterilised

"Terminal sterilisation" is meant in this invention as a procedure at the end of the packaging process, wherein the content enclosed in said packaging is terminally sterilised, the closed packaging being the sterility barrier maintaining the sterility of the content throughout the product shelf life.

LDPE has long and short chain branches with a generally recognized density range between 0.910-0.940 g/cm³ while HDPE has a limited number of short chain branches with a density above 0.940 g/cm³.

### Brief Description of the Drawings

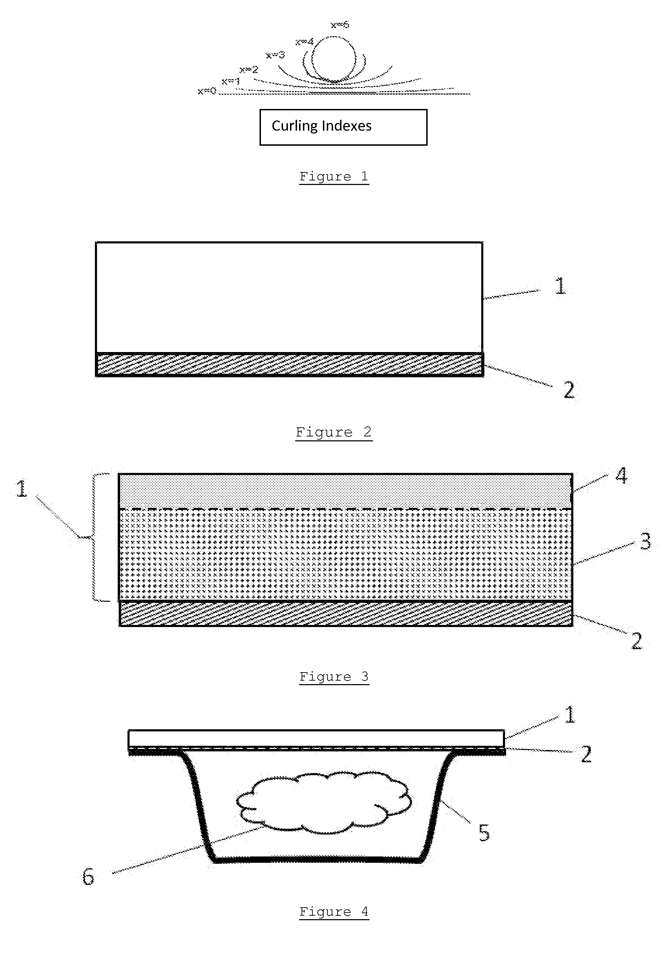

Fig. 1 represents the film curl measurement set-up.

Fig. 2 represents the cross section of a film according to the present invention.

Fig. 3 represents a film according to the present invention, wherein the outer layer comprises sub-layers.

Fig. 4 represents a closed packaging to be terminally sterilised according to the present invention.

### Detailed Description of the Invention

In the present invention, optimal heat stability and sealability are provided by using different types of polyolefines in a base outer layer 1 and a sealable inside layer 2 of a coextruded film.

An increase in the temperature resistance of the outer layer is obtained by polymer compositions comprising cyclic olefin copolymer (COC). The concentration of said COC throughout that outer layer is lower than about 50 wt%, preferably lower than 20 wt%, even down to about 10 wt%. The rest of the composition is essentially polyolefin, such as polyethylene or polypropylene. Preferably, the polyolefin is either high density polyethylene (HDPE) or polypropylene (PP) homopolymer, or copolymer.

Preferably, the inside layer 2 is based on a low density polyethylene (LDPE), optionally mixed with other polyolefin(s) providing peelability. For example, LDPE can be mixed with polybutene-1 (PB-1), homopolymer or copolymer, to provide such peelability. Preferably, LDPE has a melting point between about 90 to about 120°C.

The heat resistance of the outer layer 1 is improved by mixing the polyolefin with COC in ratio's varying between 50/50 and 80/20. Preferably, the COC of the present invention is an ethylene-norbornene copolymer. In order to improve the thermal stability of the outer layer, the COC used has typically a Tg value above 130°C corresponding to a 2-norbornene content above 40 mol%.

Such compositions provide sufficient heat-resistance to obtain a seal window in a range between 20 and 50°C. For standard packaging lines, such as horizontal rotary four side seal machines, such a seal window is needed to achieve an acceptable productivity.

If the base layer 1 comprises two or more sub-layers (3,4), it is important that the sub-layers have similar compositions in order to avoid curling of the coextruded structure. The difference in COC content between sub-layers should be less than 10%.

The difference in thermal expansion or elongation properties of the COC-containing base layer 1 and the inner layer 2 may induce curling of the film as well. For that reason, the thickness ratio between the outer layer and the sealant layer should be higher than 85/15.

While for prior art multilayer laminates, the curl varies with temperature, the coextruded structure of the present invention exhibit no variation in curl properties at different temperatures.

Depending on the type of application, the total film thickness varies between 30-200 µm.

The improved thermal stability given by the COC in the outer layer renders the film resistant to steam sterilisation in terms of dimensional stability. If the sealant layer melting temperature is sufficiently high (i.e. higher or close to steam sterilisation temperature), packaging produced with the film of the present invention can resist steam sterilisation cycles without noticeable degradation.

COC also shows excellent radiation resistance. This allows to improve the resistance of PP when used in the film. Furthermore, PE having also good radiation resistance, this renders the PE-based compositions particularly suitable for irradiation sterilisation processes.

As the new co-extruded film is based on hydrocarbon polyolefin chemistry, it is a much better product in terms of recyclability. Moreover, the use of adhesives, used to make multilayer laminates such as oPA/PE or oPET/PE, can be avoided.

### Examples

In the following examples, films have been produced on a 3-layer blown co-extrusion machine. Two-layer films have been produced by feeding a similar COC-containing composition to two extruders and a polyethylene-based composition to a third extruder. The three extruders are state-of-the-art single-screw extruders with a 30L/D ratio, all equipped with a screw diameter of respectively 70 and 120 mm, for the COC-containing ones (sub-layers of the outer layer), and 70 mm for the inner layer.

The extruders feed a 3-layer multi-conical blown film die system combined with an internal bubble cooling and dual air-ring system followed by a collapsing frame, nip and winding technology as known by those skilled in the art of blown extrusion.

In all the following examples, the sealant layer was a 85/15 mixture of LDPE (Dow LD310E with a density of 0.924 g/cm³ and a melt-index of 0.8 dg/min at 190°C and 2.16Kg) and PB-1 (Lyondell Basell PB 8640M) having intrinsically good sealing and peeling properties.

### Exemple 1

A 3-layer film was produced with pure HDPE (Hostalen GF 7740 F2 from Lyondell Basell with a density of 0.946 g/cm³ and a melting-point of 132°C) in first and second layer. The total thickness of the first and second layer forming the outer layer was 60 µm (10+50). The sealant layer thickness was 10 µm.

### Exemple 2

A 3-layer film was produced with a soft PP random heterophasic copolymer (Borealis BB213CF, having Vicat softening temperature A50 under 10N of 149 °C following ISO 306) in first and second layer. The total thickness of the first and second layer forming the outer layer was 90 µm (20+70). The sealant layer thickness was 10 µm.

### Exemple 3

A 3-layer film was produced with HDPE (Hostalen GF 7740 F2 from LyondellBasell with a density of 0.944 g/cm³ and a melting-point of 132°C) and COC, commercialised by Topas Advanced Polymers under the tradename Topas® 6015 (Tg = 160°C) in the first and the second layer. The COC concentration was 40%. The total thickness of the first and the second layer forming the outer layer was 57 µm (10+47). The sealant layer thickness was 8 µm.

### Exemple 4

A 3-layer film was produced with HDPE (Hostalen GF 7740 F2 from Lyondell Basell with a density of 0.946 g/cm³ and a melting-point of 132°C) in inner layer 2 and HDPE/COC in the outer layer. COC was commercialised by Topas Advanced Polymers under the tradename Topas® 6015 (Tg = 160°C). The COC concentration was 30%. The outer layer was produced through two extruder producing two layers having the same composition. The total thickness of the outer layer was 55 µm (15+40). The sealant layer thickness was 15 µm.

### Exemple 5

A mixture of PP heterophasic copolymer (Borealis BB213CF with a melting temperature of 163°C) and PP random heterophasic copolymer (Adflex Q100F from Lyondell Basell with a Vicat softening point of 55°C) and COC was produced. The COC was commercialised by Topas Advanced Polymers under the tradename Topas® 6013 (Tg = 140°C). Said mixture was dry-blended and fed in two extruders producing two sub-layers forming the outer layer. The COC concentration was 20 %. The total thickness of the outer layer was 90 µm (20+70). The sealant layer thickness was 10 µm.

### Exemple 6

A mixture of PP random copolymer, PP random heterophasic copolymer (Adflex Q100F from Lyondell Basell with a Vicat softening point of 55°C)and COC was produced. The COC was commercialised by Topas Advanced Polymers under the tradename Topas® 6013 (Tg = 140°C). Said mixture was dry-blended and fed in two extruders, producing two sub-layers forming the outer layer. The COC concentration was 40 %. The total thickness of the first and second layer, forming the outer layer was 40 µm (15+25). The sealant layer thickness was 15 µm.

### Exemple 7: comparative

A comparative laminate OPET 12 µm /PE peelable 40 µm for this application was also evaluated.

### MEASUREMENTS

### Curl measurements

The curl properties of the produced films was evaluated according to the following setup. The evaluation was performed under controlled conditions (23°C, film free of static charges, free of turbulence)

The measurement itself was performed according to the following procedure:
- A circular form of 100 cm² (diameter : ± 11,28 cm) is cut out of the material to be tested and is discharged on both sides using a (de)ionisation bar. It is recommended to take samples over the entire width of the laminate/film.
- The circular sample is then transferred into a controlled-temperature (23°C) cabinet and is left untouched for 5 minutes for conditioning.
- Then, the distance between the (curling) edges of the circle is measured and the corresponding curl index is assigned as defined in Table 1.
- The side to which the material curls and curl direction (MD or CD) is also recorded.

**Table 1**

| Distance (in cm) | Curl index |
|---|---|
| 11.28 | 0 |
| 10.7 | 1 |
| 10.0 | 2 |
| 8.0 | 3 |
| 4.0 | 4 |
| 0.0 | 5 |

### Evaluation of seal behaviour / heat-stability

Seal tests were performed on a KOPP sealing apparatus at increasing temperatures, under the following procedure:
- Strips of ± 30x10 cm are cut out of the laminate / film to be tested. Two strips are laid onto each other (seal/peel side on the inside) for seal testing.
- Seal tests are performed on a KOPP lab apparatus:
   ○ upper jaw : Teflon-coated steel, heated,
   ○ bottom jaw : rubber, not heated.
- Seal conditions:
   ○ seal of 1 x 20 cm,
   ○ dwell time : 1 second,
   ○ pressure : 400N/20 cm².
Both sticking to the upper jaw and shrinkage of the sealed area are evaluated following the stickiness index summarised in Table 2 and shrinkage index summarised in Table 3, respectively.

**Table 2**

| sticking to upper jaw | Stickiness index |
|---|---|
| No sticking | 0 |
| Very slight sticking; film releases very easily from jaw | 1 |
| Slight sticking; film releases easily from jaw | 2 |
| Moderate sticking, film can be released form the jaw without leaving traces | 3 |
| Sticking, difficult to release film from the jaw, traces of film left on the jaw | 4 |
| Severe sticking (film (partly) molten) | 5 |

**Table 3**

| Shrinkage/deformation of seal area | Shrinkage index |
|---|---|
| No shrinkage, no deformations | 0 |
| No shrinkage, minor deformations in the sealed area | 1 |
| Slight shrinkage; minor deformations in the sealed area | 2 |
| Moderate shrinkage, moderate deformations in the sealed area | 3 |
| Severe shrinkage, start melting, severe deformation of the sealed area | 4 |
| Melting of the film, complete shrinkage | 5 |

### Evaluation of resistance against gamma sterilisation

The gamma-sterilisation resistance of the films was also evaluated. The dose was fixed to 50kGy. The evaluation was made by measuring mechanical properties before and after sterilisation. The parameter used to measure mechanical strength is tensile strength of the material both in MD and CD. This was performed by the following procedure:
- A4 sheets of the laminate/film are gamma-sterilised with a dose of 50kGy. Tensile strength is measured on the original samples and the sterilised samples two weeks after the sterilisation cycle;
- Tensile-strength measurements are done according to ASTM D882-00 using following parameters:
   ○ initial grip separation : 50 mm
   ○ rate of grip separation : 500 mm/min;

**Table 4**

| Loss of tensile strength | Loss index |
|---|---|
| < 10% | 0 |
| 10-20% | 1 |
| 20-30% | 2 |
| 30-40% | 3 |
| 40-50% | 4 |
| >50% | 5 |

The results obtained for those four measurements are summarised in Table 5.

**Table 5**

| **Example** | **Thermal resistance at 140°C** | **Deformation at 140°C** | **Curl** | **Irradiation resistance (MD/CD)** |
|---|---|---|---|---|
| (1) | 5 | 5 | 0 | 1/1 |
| (2) | 1 | 1 | 0 | 4/3 |
| (3) | 0 | 0 | 0 | 1/2 |
| (4) | 0 | 1 | 5 | 1/2 |
| (5) | 1 | 0 | 0 | 3/1 |
| (6) | 1 | 0 | 4 | 3/1 |
| (7) | 0 | 0 | 4 | 0 |

## Claims

1. A multilayer, substantially curl-free, coextruded polymeric film for the production of packaging for medical devices intended to be terminally sterilised by heat, gamma or beta irradiation, comprising:
- a polyolefinic base layer comprising between 10 % and 50 % by weight of a cyclic olefin copolymer having a Tg higher than 130°C;
- a polyolefinic seal layer having a thickness between 5 and 15 % of the total film thickness.

2. The film of Claim 1 wherein the polyolefin of said base layer is selected from the group consisting of polyethylene, polypropylene, polybutylene, their copolymers with linear alpha-olefins having 2 to 10 carbon atoms, and mixtures thereof.

3. The film of Claim 2 wherein the polyolefin of said base layer is polypropylene or a copolymer of propylene and ethylene.

4. The film of any of the previous claims wherein the polyolefin of said base layer is a high-density polyethylene.

5. The film of any of the previous claims wherein said seal layer is a polyethylene or polyethylene-based peelable seal layer.

6. The film of Claim 5 wherein said peelable seal layer comprises a mixture of polyethylene and polybutene-1.

7. The film of any of the previous claims wherein said base layer comprises a first sub-layer (3) with a first COC concentration and a second sub-layer (4) with a second COC concentration and wherein the first COC concentration does not differ from the second COC concentration by more than 10%.

8. A packaging comprising the film according to any of the previous claims.

9. Use of the coextruded multilayer polyolefin film of any of the previous claims 1 to 7, for packaging of medical devices intended to be sterilised.
